# FASCICULE DE BREVET EUROPEEN

(11) **EP 3 097 272 B1**
(45) Date de publication et mention de la délivrance du brevet: **06.03.2019**
(21) Numéro de dépôt: 15704338.1
(22) Date de dépôt: 15.01.2015
(51) Int. Cl.: F01D 11/04, F01D 25/16, F01D 25/18, F02C 7/06

(54) **ENCEINTE DE PALIER D'UNE TURBOMACHINE**
TURBOMASCHINENLAGERGEHÄUSE
TURBOMACHINE BEARING HOUSING

(30) Priorité: 23.01.2014 FR 1450570
(43) Date de publication de la demande: 30.11.2016
(73) Titulaire: Safran Aircraft Engines, 75015 Paris (FR)
(72) Inventeur: BIOUD, Jérémy, Lucien, Jacques, 77550 Moissy-Cramayel Cedex (FR); BOURGET, Sébastien, 77550 Moissy-Cramayel Cedex (FR); EVAIN, Gaël, 77550 Moissy-Cramayel Cedex (FR); FONTANEL, Eddy, Stéphane, Joël, 77550 Moissy-Cramayel Cedex (FR); LEUTARD, Florence, Irène, Noëlle, 77550 Moissy-Cramayel Cedex (FR); LIMA, Christophe, 77550 Moissy-Cramayel Cedex (FR); ROSSI, Giuliana, Elisa, 77550 Moissy-Cramayel Cedex (FR)
(74) Mandataire: Gevers & Orès
(86) Numéro de dépôt international: PCT/FR2015/050102
(87) Numéro de publication internationale: WO 2015/110744

(56) Documents cités:
- EP-A1- 1 055 848
- EP-A2- 1 316 678
- FR-A1- 2 952 402
- US-A1- 2013 280 043

## Description

### Domaine de l'invention

Le domaine de la présente invention est celui des turbomachines, notamment celui des moteurs à turbine à gaz destinés à la propulsion des aéronefs. L'invention porte sur l'équilibre des pressions aux bornes des organes d'étanchéités entre des éléments tournant et des éléments fixes de la turbomachine, en particulier, dans la zone des paliers supportant les arbres des rotors, sur l'étanchéité des enceintes dans lesquels ceux-ci sont logés.

### Etat de la technique

Une turbomachine pour aéronef comprend généralement, d'amont en aval dans le sens de l'écoulement des gaz, une soufflante, un ou plusieurs étages de compresseurs, par exemple un compresseur basse pression, BP, et un compresseur haute pression, HP, une chambre de combustion, un ou plusieurs étages de turbines, par exemple une turbine haute pression, et une turbine basse pression, et une tuyère d'échappement des gaz. A chaque compresseur peut correspondre une turbine, les deux étant reliés par un arbre, formant ainsi, par exemple, un corps haute pression, HP, et un corps basse pression, BP.

Les arbres sont supportés à l'amont et à l'aval par des paliers qui sont logés dans des enceintes les isolant du reste du moteur. Les enceintes contiennent ainsi des roulements qui sont interposés entre un organe tournant du moteur et une partie fixe qui le supporte ou bien entre deux parties tournantes, les deux tournant à des vitesses de rotation différentes telles qu'un tourillon solidaire de l'arbre HP et l'arbre BP. Les paliers sont lubrifiés et refroidis par de l'huile. L'huile, projetée par les pièces en rotation, y forme un brouillard de gouttelettes en suspension. Ces enceintes sont formées et délimitées par des parois de la structure fixe du moteur mais aussi par les éléments tournants. Des moyens d'étanchéité sont prévus dans les zones où les parties fixes et mobiles se rejoignent. Ces moyens doivent permettre le passage à travers eux d'un flux d'air, dans le but de pressuriser l'enceinte et retenir au maximum l'huile à l'intérieur de celle-ci. C'est pourquoi l'étanchéité entre les éléments fixes et les éléments tournants d'une enceinte d'huile est une problématique particulièrement délicate.

L'étanchéité est réalisée couramment à l'aide d'un joint labyrinthe qui est la solution d'étanchéité la plus simple, la plus robuste et la plus répandue dans les turbomachines. Un tel joint comporte, d'une part, des léchettes, ou nervures fines, qui sont solidaires d'une pièce tournante et, d'autre part, un matériau abradable, positionné en vis-à-vis des léchettes, qui est solidaire d'une pièce fixe. Comme on est proche ici d'un roulement, on impose un jeu entre les léchettes et l'abradable afin que les léchettes ne creusent pas l'abradable et ne créent pas de copeaux avec le matériau constituant celui-ci : Les roulements sont sensibles aux particules métalliques qui sont susceptibles de les détériorer. Chaque léchette crée en coopération avec l'abradable qui lui fait face une perte de charge et c'est la somme de ces pertes de charges qui assure l'étanchéité requise. D'autres techniques de joint sont également possibles, tels que des joints à brosse, comme cela est décrit dans la demande de brevet au nom de la demanderesse, FR 1261694 où un joint labyrinthe est associé à un joint à brosse pour contrôler les débits de fuite au travers du joint d'étanchéité quel que soit le régime du moteur. La demande de brevet FR 2 929 325 au nom de la demanderesse vise une enceinte de palier avec un contrôle du débit de fuite par celui de la pression à l'intérieur de l'enceinte en fonction du régime également. Dans cette demande sont évoqués des joints de type radial segmenté que l'on désigne aussi par l'acronyme JRS. L'application de ce type de joint à une turbomachine est décrite dans le brevet au nom de la demanderesse EP0387122 A1.

La demande de brevet US2013/0280043 A1 vise une enceinte de palier de turbomachine comprenant une paroi fixe, un arbre tournant et un premier et un second joints d'étanchéité entre la paroi et l'arbre, et une chambre entre la paroi fixe et un élément de stator extérieur alimentée en air par l'ouverture.

Une enceinte de palier comprend en général deux joints d'étanchéité le long de l'arbre, l'un en amont du palier contenu dans l'enceinte, l'autre en aval de ces derniers. Cependant certaines enceintes de palier peuvent comprendre un ou plusieurs joints supplémentaires et l'enceinte peut elle-même comprendre plusieurs paliers. Comme indiqué plus haut, ces joints sont parcourus par un flux de gaz de l'extérieur des joints vers l'intérieur de l'enceinte dans le but d'empêcher, pendant le fonctionnement du moteur, que l'huile contenue dans l'enceinte ne s'échappe et vienne polluer les autres organes du moteur. Ce gaz est de l'air provenant d'une source d'air sous pression, notamment des compresseurs.

L'enceinte peut être en communication avec l'air libre et être maintenue à une pression proche de la pression atmosphérique. Les paliers à l'intérieur des enceintes sont baignés par un brouillard d'huile qui est extrait de l'enceinte en continu et séparé dans un déshuileur.

L'enceinte peut aussi ne pas être en communication directe avec l'air libre et ne pas comprendre de déshuilage. Une pompe de récupération d'huile connectée à un port de récupération, placée à 6h, au point bas du moteur, récupère l'huile et l'air de l'enceinte et crée ainsi une aspiration d'air à travers les joints de l'enceinte d'huile. La pompe a avantageusement un débit de pompage supérieur à celui de l'arrivée d'huile dans l'enceinte permettant la lubrification du palier. Dans ce cas il est important d'avoir un flux d'air à travers les deux joints d'étanchéité amont et aval, afin de retenir l'huile au niveau des deux joints. Et pour qu'il y ait des flux d'air traversant les deux joints de l'enceinte huile, il est nécessaire d'avoir un équilibre de pression en amont des deux joints. Par cet équilibre de pression, il ne se crée pas de chemin préférentiel qui favoriserait un joint plutôt que l'autre et qui compromettrait ainsi la performance d'étanchéité de ce dernier.

La présente invention vise à résoudre le problème de l'équilibre des pressions à l'extérieur des deux joints de l'enceinte en augmentant la pression en amont du joint dont le niveau de pression est le plus faible des deux.

Selon un agencement connu, l'air dédié à la pressurisation des joints d'étanchéité, venant des compresseurs, pénètre dans la chambre dans laquelle se trouve l'enceinte de palier par une ouverture située près de l'arbre puis est guidé le long de la surface extérieure de l'enceinte de palier radialement puis axialement par des passages appropriés jusque vers la chambre aval pour alimenter le joint aval. L'analyse des niveaux de pression de ce flux d'air de pressurisation montre qu'il existe un gradient de pression entre l'ouverture d'entrée de l'air et la zone située à un niveau radial plus élevé. Ce gradient de pression résulte du vortex de recompression dans cette chambre située à l'amont du joint amont de l'enceinte de palier. Par l'expression « vortex de recompression », on désigne le phénomène qui lie l'écart radial à une différence de pression en présence d'un écoulement tournant. Ici l'écoulement est rendu tournant car il est entraîné par la rotation de l'arbre de la turbomachine. Le flux d'air de pressurisation issu du compresseur étant introduit dans la chambre par une ouverture située radialement au niveau de l'arbre, la rotation de l'arbre induit la mise en rotation de ce flux d'air qui tourbillonne radialement jusque vers un canal annulaire d'évacuation qui est situé à un rayon supérieur que celui de l'ouverture d'entrée dans la chambre. Ce mouvement tourbillonnaire crée un gradient de pression radial sur le flux d'air de ventilation.

### Exposé de l'invention

La présente invention met à profit ce gradient de pression pour récupérer de l'air à une pression plus élevée qu'au niveau du joint d'étanchéité pour précisément garantir un niveau de pression suffisant en amont d'un premier joint et un équilibre entre les pressions à l'extérieur des deux joints de l'enceinte. Un débit d'air suffisant au travers des deux joints d'étanchéité pour empêcher toute fuite d'huile est ainsi garanti.

L'invention porte sur un ensemble de turbomachine selon la revendication 1. Ainsi, on se donne le moyen de contrôler la pression au niveau du premier joint d'étanchéité de telle manière que les pressions respectives au niveau des deux joints d'étanchéité soient équilibrées.
Selon un mode de réalisation avantageux, dans la mesure où la paroi de l'enceinte de palier comprend une portion orientée radialement, le moyen de guidage comprend une plaque de guidage, en forme de simple tôle par exemple, disposée radialement en parallèle à ladite portion de paroi de l'enceinte. Plus particulièrement, le premier joint d'étanchéité étant supporté par un flasque qui est fixé à une bride de l'enceinte, et la portion de paroi de l'enceinte étant formée par ledit support, cette plaque de guidage est rapportée sur la paroi de l'enceinte et boulonnée avec le support du joint d'étanchéité sur la bride, par exemple. De préférence, la plaque de guidage en forme de tôle définit un faible jeu avec l'arbre. Il s'agit en effet d'éviter qu'une trop grande partie de l'air guidé entre la plaque et la paroi de l'enceinte retourne vers la chambre amont. L'air est destiné à traverser le joint au niveau de l'arbre.
On améliore encore la récupération de pression le long de la paroi de l'enceinte de palier avec un moyen de guidage comprenant un dispositif agencé pour guider le flux d'air radialement avec - en sortie de ce dispositif - une composante de vitesse tangentielle faible par rapport à la composante radiale. En réduisant la rotation de l'air on réduit la perte de charge le long du moyen de guidage.

On réduit avantageusement la composante de vitesse tangentielle de ce flux d'air en disposant un anneau percé d'orifices radiaux, notamment de forme oblongue, ou comportant des ailettes orientant le flux radialement ou encore une bague en nid d'abeille. L'invention s'applique en particulier à une enceinte dont le premier joint d'étanchéité est un joint radial segmenté. En effet ce type de joint est très efficace. Le deuxième joint d'étanchéité peut être un joint labyrinthe.

La solution de l'invention s'applique particulièrement au cas où la prise d'air distante radialement correspond à une zone de compression tourbillonnaire.

Enfin, l'invention porte plus précisément sur une turbomachine comprenant une enceinte de palier selon l'invention avec une chambre annulaire en amont de l'enceinte de palier. Cette chambre est alimentée en air par une ouverture d'alimentation proche de l'arbre et comprend une ouverture d'échappement d'air, en forme de canal annulaire, radialement distante de l'arbre. Il y a donc un écart radial entre l'ouverture d'alimentation en air de la chambre amont et son ouverture d'échappement d'air. La prise d'air du moyen de guidage de l'air de mise en pression du premier joint, distante radialement, est disposée à proximité de ladite ouverture d'échappement d'air.

La turbomachine comprend également une chambre annulaire en aval de l'enceinte de palier, alimentée en air de mise en pression du second joint d'étanchéité depuis ladite ouverture d'échappement de la chambre annulaire amont. Une partie de l'air de mise en pression du joint passe dans ladite enceinte de palier au travers du second joint.

### Brève description des figures

D'autres caractéristiques et avantages ressortiront de la description qui suit d'un mode de réalisation non limitatif de l'invention en référence aux dessins annexés sur lesquels
La figure 1 représente en demi-coupe axiale une vue schématique d'un turboréacteur à double flux, selon l'art antérieur ;
La figure 2 représente une vue schématique en coupe axiale d'une enceinte de palier selon l'art antérieur ;
La figure 3 représente l'enceinte de palier de la figure 2 sur laquelle a été monté le dispositif de l'invention.
La figure 4 représente un exemple de montage du dispositif de l'invention.

### Description détaillée d'un mode de réalisation de l'invention

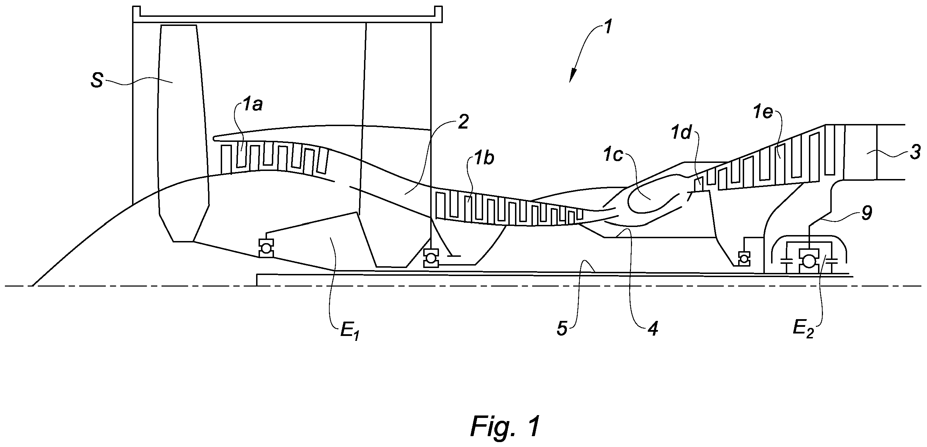

En se référant à la figure 1, on voit un turboréacteur 1 de l'art antérieur qui comporte, de manière classique, une soufflante S, un compresseur basse pression BP 1a, un compresseur haute pression HP 1b, une chambre de combustion 1c, une turbine haute pression HP 1d et une turbine basse pression BP 1e. Le compresseur haute pression 1b et la turbine haute pression 1d sont reliés par un arbre haute pression 4 et forment avec lui un corps haute pression HP. Le compresseur basse pression 1a et la turbine basse pression 1e sont reliés par un arbre basse pression 5 et forment avec lui un corps basse pression BP. Ces corps sont portés par des pièces structurales fixes, dénommées carter intermédiaire 2 pour le support de leurs roulements situés en amont et carter d'échappement 3 pour le support de leurs roulements situés en aval.

Pour assurer leur lubrification, ces roulements sont enfermés dans des enceintes, à peu près étanches, qui sont formées par une juxtaposition de parois fixes liées aux carter intermédiaire 2, respectivement au carter d'échappement 3, et des éléments mobiles liés aux arbres haute et basse pression respectivement. Une turbomachine comporte ainsi, généralement, une enceinte amont E1 associée au carter intermédiaire 2 et une enceinte aval E2 associée au carter d'échappement 3. Comme indiqué précédemment ces enceintes sont baignées dans une atmosphère contenant de l'huile pour la lubrification des différents organes et elles sont traversées par un flux d'air, au débit contrôlé, à des fins de pressurisation.

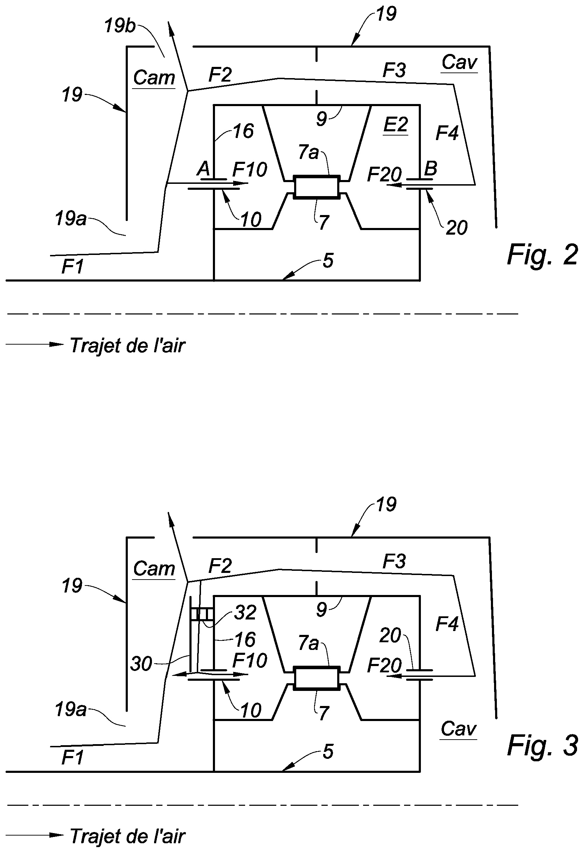

Sur la figure 2, on a représenté un palier dans son enceinte selon un agencement de l'art antérieur. Il s'agit ici du palier arrière associé au carter d'échappement avec son enceinte E2.

L'extrémité aval de l'arbre BP 5 est supportée par un roulement 7 dont la bague fixe 7a est montée dans un support de palier 9 solidaire du carter d'échappement du moteur. Le roulement baigne dans un brouillard d'huile produit par des moyens non représentés. Le support de palier 9 est conformé de manière à ménager avec l'arbre une enceinte E2 enveloppant le palier 7. Le support de palier forme une paroi fixe 9. A l'amont du palier un premier joint d'étanchéité 10 assure l'étanchéité entre la paroi fixe 9 et l'arbre 5. A l'aval du palier 7 un second joint d'étanchéité 20 assure l'étanchéité entre le support et l'arbre 5. Le premier joint est ici un joint radial segmenté le second joint d'étanchéité est un joint labyrinthe. Le support de palier 9 comprend une portion de paroi 16 à l'amont qui s'étend perpendiculairement à l'arbre 5.

Le second joint labyrinthe 20 comprend des léchettes coopérant avec un élément en matériau abradable. Une vrille comme pour le premier joint ramène vers l'enceinte l'huile qui a tendance à s'accumuler contre le joint.

Les flèches indiquent la circulation de l'air de mise en pression des joints. L'air F1 issu des compresseurs pénètre par une ouverture 19a proche de l'arbre 5 dans la chambre Cam formée entre la paroi amont de l'enceinte E2 et un élément de stator 19 tel qu'une tôle. Cet air tourbillonne à l'intérieur de cette chambre en raison de la rotation de l'arbre 5. Il subit une compression tourbillonnaire, ou un vortex de recompression et s'échappe en partie en F2 par l'ouverture d'échappement 19b, éloignée de l'arbre, formée par le canal annulaire ménagé entre l'enceinte E2 et la tôle 19. La pression est déterminée de manière qu'une partie F10 de l'air dans cette chambre Cam passe au travers du premier joint 10 dans l'enceinte de palier de manière à empêcher toute fuite d'huile à travers ce joint. L'air F2 suit un trajet F3 puis F4 jusque dans la chambre aval Cav du côté du second joint d'étanchéité 20 de palier. Une partie F20 de l'air passe au travers du joint 20. La pression de l'air augmente de F1 en F2, comme indiqué plus haut, puis diminue en F3 jusqu'en F4 en raison des pertes de charge dans le circuit entre les deux chambres Cam et Cav. On constate que dans cette configuration la pression en Ajuste en amont du premier joint 10 reste inférieure à la pression en B juste en entrée du second joint malgré les pertes de charge en F3 et F4.

La pression en B est à un niveau suffisant par rapport à la pression régnant à l'intérieur de l'enceinte pour empêcher que l'huile fuît au travers du joint labyrinthe 20.

Le déficit de pression en A est susceptible d'entraîner en revanche une fuite d'huile à travers le joint 10.

Partant de la constatation qu'il existe un gradient de pression entre l'entrée en F1 et la sortie de la chambre amont Cam en F2, un moyen de guidage de l'air de mise en pression du joint entre la zone de pression F2 et l'entrée A du joint 10 a été ajouté conformément à l'invention.

La figure 3 montre l'agencement de l'invention. Une tôle 30 a été montée, avec interposition d'une entretoise 32, sur la portion de paroi 16 du support de palier 9. Cette tôle 30 définit un passage formant ledit moyen de guidage d'air qui s'étend radialement entre l'arbre 5 et le canal annulaire de sortie 19b de la chambre Cam. Un faible jeu J est présent entre l'arbre 5 et la tôle 30. Par cette disposition, l'air dans ce passage est à la pression régnant en F2 à la perte de charge près et un flux d'air centripète est créé dans le passage qui passe à travers le joint 10 et le jeu J en raison du niveau de pression inférieur en F1 et dans l'enceinte de palier. En s'assurant que le jeu J soit aussi réduit que possible, on obtient qu'un flux d'air traverse le joint 10.

Outre l'augmentation de pression en amont du premier joint, la tôle présente aussi l'avantage de s'affranchir des variations de pression qui peuvent survenir dans la chambre Cam à toutes les hauteurs radiales. Ces variations de pressions indésirables peuvent être causées par la forme du carter et par la force du vortex. La pression obtenue en amont du joint n'est par ce moyen que peu soumise aux variations de son environnement.

On améliore encore la récupération de pression en redressant le flux d'air centripète. Ceci est rendu possible par des moyens redresseurs qui annulent ou au moins réduisent la composante tangentielle de vitesse du flux d'air centripète. Ces moyens redresseurs de flux sont par exemple des orifices convenablement orientés, par exemple de forme oblongue, ménagés dans l'entretoise 32. Au lieu d'orifices on peut prévoir des ailettes radiales ou tout autre moyen, une bague en nid d'abeille par exemple.

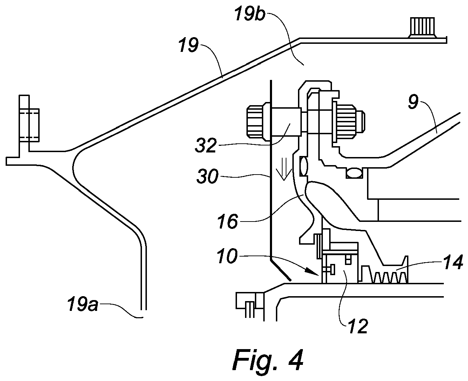

La figure 4 montre un exemple de montage pratique avec un joint radial segmenté. Le joint 10 comprend selon un mode de réalisation tel que décrit dans le brevet EP 387122 une bague segmentée 12 par exemple en graphite, dont les segments sont solidarisés au moyen d'un anneau élastique et sont logés dans une rainure d'une plaque support de joint annulaire 16. Les segments sont en appui contre une piste annulaire aménagée sur la surface de l'arbre. La plaque support de joint 16 forme la partie amont de l'enceinte de palier. La plaque support de joint 16 s'étend dans un plan transversal par rapport à l'arbre, et est boulonnée à une bride amont 18 du support de palier 9. Comme cela est connu également, une vrille 14 est disposée en aval du joint dont la fonction est de recueillir l'huile qui s'accumule contre le joint et de la guider vers l'enceinte.

Par la solution de l'invention, on récupère la pression générée par le mouvement tourbillonnaire de l'air pour ajuster la pression en entrée du premier joint. Cette pression est ajustée de façon à réduire et même quasiment annuler la différence de pression avec l'entrée du second joint à l'aval et ainsi équilibrer les pressions aux bornes de l'enceinte de palier.

Cette solution est avantageusement robuste car l'équilibre des pressions n'est pas dépendant de la force du vortex mais uniquement des pertes de charge du chemin entre les deux chambres amont et aval. On peut ainsi ajuster les pertes de charge du dispositif de guidage et ainsi équilibrer quasiment parfaitement les pressions.

L'invention a été décrite dans le cas où il s'agit d'ajuster le niveau de pression immédiatement en amont du joint d'étanchéité amont de l'enceinte de palier de l'arbre basse pression d'un moteur à double corps. Cependant elle n'est pas limitée à cette application. Elle peut être transposée à tous les cas où il est nécessaire d'ajuster la pression au niveau d'un joint d'étanchéité d'une enceinte de palier et où il existe une source de pression voisine, notamment résultant d'un vortex de recompression.

## Revendications

1. Ensemble de turbomachine comprenant une enceinte avec une paroi fixe (9), un arbre tournant (5), un premier et un second joints d'étanchéité (10; 20) entre la paroi et l'arbre, et une chambre (Cam) en amont de l'enceinte de palier entre la paroi fixe (9) et un élément de stator (19) alimentée en air par une ouverture (19a) proche dudit arbre (5), dans lequel un moyen (30) de guidage d'air est agencé le long de la surface de la paroi (9) de l'enceinte, extérieure à celle-ci, de façon qu'au moins une partie de l'air sortant du moyen de guidage passe à travers le premier joint d'étanchéité (10), ce moyen de guidage étant alimenté en air par une prise d'air dans la chambre (Cam) distante radialement de l'arbre, l'ouverture (19a) d'alimentation en air de la chambre (Cam) étant plus proche radialement de l'arbre (5) que la prise d'air alimentant le moyen de guidage (30), l'air issu de la prise d'air étant à une pression plus élevée qu'au niveau dudit arbre (5).

2. Ensemble selon la revendication précédente dont le moyen de guidage comprend une plaque (30) disposée radialement le long et à distance de la paroi fixe (9) de l'enceinte.

3. Ensemble selon la revendication précédente dont la plaque (30) définit un jeu (J) avec l'arbre (5) tel qu'une partie de l'air guidé entre la plaque (30) et la paroi fixe (9) de l'enceinte est orienté à travers le premier joint d'étanchéité (10).

4. Ensemble selon l'une des revendications précédentes dont le moyen de guidage comprend un dispositif agencé pour guider le flux d'air radialement avec une composante de vitesse tangentielle faible par rapport à la composante radiale.

5. Ensemble selon la revendication précédente dont ledit dispositif est formé d'une entretoise (32) en forme d'anneau percé d'orifices radiaux, ou bien munie d'un nid d'abeille ou bien avec des ailettes.

6. Ensemble selon l'une des revendications précédentes dont le premier joint d'étanchéité (10) est un joint radial segmenté.

7. Ensemble selon l'une des revendications précédentes comprenant un deuxième joint d'étanchéité (20), notamment un joint labyrinthe.

8. Ensemble selon l'une des revendications précédentes dont la prise d'air distante radialement correspond à une zone de compression tourbillonnaire dans la chambre (Cam)

9. Turbomachine comprenant une ensemble selon l'une des revendications précédentes dans laquelle la chambre (Cam) est annulaire et avec une ouverture d'échappement (19b) radialement distante de l'arbre, ladite prise d'air distante radialement étant disposée à proximité de ladite ouverture d'échappement.

10. Turbomachine selon la revendication précédente comprenant une chambre annulaire aval (Cav) en aval de l'enceinte alimentée en air depuis ladite ouverture d'échappement (19b) de la chambre annulaire amont (Cam), une partie de l'air passant dans ladite enceinte.

## Patentansprüche

1. Turbomaschinenanordnung, umfassend ein Gehäuse mit einer festen Wand (9), eine drehbare Welle (5), eine erste und eine zweite Dichtung (10; 20) zwischen der Wand und der Welle, und eine Kammer (Cam) stromaufwärts vom Lagergehäuse zwischen der festen Wand (9) und einem Statorelement (19), die durch eine Öffnung (19a) nahe der Welle (5) mit Luft versorgt wird, in der ein Luftführungsmittel (30) entlang der Oberfläche der Wand (9) des Gehäuses außerhalb von ihr angeordnet ist, so dass zumindest ein Teil der Luft, die aus dem Führungsmittel austritt, durch die erste Dichtung (10) verläuft, wobei dieses Führungsmittel durch einen zur Welle radial beabstandeten Lufteinlass in der Kammer (Cam) versorgt wird, wobei die Öffnung (19a) der Luftversorgung der Kammer (Cam) radial näher an der Welle (5) liegt als der Lufteinlass, der das Führungsmittel (30) versorgt, wobei die Luft, die aus dem Lufteinlass stammt, einen höheren Druck als auf Höhe der Welle (5) aufweist.

2. Anordnung nach dem vorstehenden Anspruch, wobei das Führungsmittel eine Platte (30) umfasst, die radial entlang und beabstandet von der festen Wand (9) des Gehäuses angeordnet ist.

3. Anordnung nach dem vorstehenden Anspruch, wobei die Platte (30) mit der Welle (5) ein Spiel (J) definiert, so dass ein Teil der zwischen der Platte (30) und der festen Wand (9) des Gehäuses geführten Luft durch die erste Dichtung (10) geleitet wird.

4. Anordnung nach einem der vorstehenden Ansprüche, wobei das Führungsmittel eine Einrichtung umfasst, die angeordnet ist, um den Luftstrom radial mit einer in Bezug auf die radiale Komponente schwachen tangentialen Geschwindigkeitskomponente zu führen.

5. Anordnung nach dem vorstehenden Anspruch, wobei die Einrichtung aus einem Abstandhalter (32) in Form eines Ringes mit radialen Löchern durchbohrt oder aber mit einem Wabenmuster versehen oder aber mit Rippen versehen gebildet ist.

6. Anordnung nach einem der vorstehenden Ansprüche, wobei die erste Dichtung (10) eine radiale segmentierte Dichtung ist.

7. Anordnung nach einem der vorstehenden Ansprüche, umfassend eine zweite Dichtung (20), insbesondere eine Labyrinthdichtung.

8. Anordnung nach einem der vorstehenden Ansprüche, wobei der radial beabstandete Lufteinlass einem wirbelerzeugenden Kompressionsbereich in der Kammer (Cam) entspricht.

9. Turbomaschine, umfassend eine Anordnung nach einem der vorstehenden Ansprüche, wobei die Kammer (Cam) ringförmig ist und mit einer radial von der Welle beabstandeten Austrittsöffnung (19b), wobei der radial beabstandete Lufteinlass in der Nähe der Austrittsöffnung angeordnet ist.

10. Turbomaschine nach dem vorstehenden Anspruch, umfassend eine ringförmige stromabwärtige Kammer (Cav) stromabwärts vom Gehäuse, die ausgehend von der Austrittsöffnung (19b) der ringförmigen stromaufwärtigen Kammer (Cam) mit Luft versorgt wird, wobei ein Teil der Luft durch das Gehäuse verläuft.

## Claims

1. Turbine engine set comprising an enclosure with a fixed wall (9), a rotating shaft (5), a first and a second seal (10; 20) between the wall and the shaft, and a chamber (Cam) upstream from the bearing enclosure between the fixed wall (9) and a stator element (19) which is supplied with air through an opening (19a) which is close to said shaft (5), in which a means (30) for guiding air is arranged along the surface of the wall (9) of the enclosure, on the outside thereof, in such a way that at least some of the air leaving the guide means passes through the first seal (10), said guide means being supplied with air through an air intake in the chamber (Cam) which is radially remote from the shaft, the opening (19a) for feeding in air the chamber (Cam) being radially closer to the shaft (5) than to the air intake feeding the guide means (30), the air from the air intake being at a higher pressure than in the region of said shaft (5).

2. Set according to the preceding claim, the guide means of which comprises a plate (30) which is arranged radially along and at a distance from the fixed wall (9) of the enclosure.

3. Set according to the preceding claim, the plate (30) of which defines a clearance (J) with the shaft (5) in such a way that some of the air which is guided between the plate (30) and the fixed wall (9) of the enclosure is oriented through the first seal (10).

4. Set according to any one of the preceding claims, the guide means of which comprises a device which is arranged so as to guide the air flow radially with a tangential speed component which is low in relation to the radial component.

5. Set according to the preceding claim, said device of which is formed by a spacer (32) in the form of a ring which is perforated by radial orifices, or else is provided with a honeycomb structure or with fins.

6. Set according to any one of the preceding claims, the first seal (10) of which is a segmented radial seal.

7. Set according to any one of the preceding claims, comprising a second seal (20), in particular a labyrinth seal.

8. Set according to any one of the preceding claims, the radially remote air intake of which corresponds to a vortex compression region in the chamber (Cam).

9. Turbine engine comprising a set according to any one of preceding claims wherein the chamber (Cam) is annular and with a discharge opening (19b) which is radially remote from the shaft, said radially remote air intake being arranged in proximity to said discharge opening.

10. Turbine engine according to the preceding claim, comprising a downstream annular chamber (Cav) downstream of the enclosure, which is supplied with air from said discharge opening (19b) of the upstream annular chamber (Cam), some of the air passing into said enclosure.
